# EUROPEAN PATENT APPLICATION

(11) **EP 1 280 352 A2**
(43) Date of publication of application: **29.01.2003**
(21) Application number: 02076625.9
(22) Date of filing: 24.04.2002
(51) Int. Cl.: H04N 7/16

(54) **Wireless video-intercom apparatus for recording, remote transmission and reception of images and sounds**

(30) Priority: 15.10.2001 IT MI20012126
(71) Applicant: Fly S.R.L., Veniano (Como) (IT)
(72) Inventor: Galimberti, Roberto, 20052 Monza (MI) (IT)
(74) Representative: Raimondi, Alfredo, Dott. Ing. Prof.

(57) **Abstract**

Apparatus for recording, remote transmission and display of images and sounds comprising means (110,111) for recording images and sounds, arranged in at least one detection station (1); means (120,121) for analog/digital conversion of the images and sounds; means (130) for compression of the digital signals representing the images and sounds; means (310) for radiofrequency transmission to at least one station (2) for receiving the compressed digital signals; means (310) for receiving the digital signals transmitted at radiofrequency arranged in at least one receiving station (2); wherein said means (310) for transmitting/receiving the digital signals of the images and sounds are of the DECT type and comprise a frequency modulation device (GFSK) with a working frequency of between 1500 and 2300 MHz.

## Description

The present invention relates to a method and an associated apparatus for recording, remote transmission and display of images and sounds, in which the means for transmitting/receiving the digital signals of the images and sounds are of the DECT type and comprise a device for GFSK frequency modulation with a working frequency of between 1500 and 2300 MHz.

In the art devices for exchanging (bidirectional) sound signals and/or sending (monodirectional) signals for remote activation of actuating devices are known.

Examples of this devices consist of intercom systems for domestic dwellings, which comprise an element located on the outside of the dwelling and one or more elements located inside the dwelling(s) by means of which it is possible to conduct conversations from the outside to the inside and vice versa and perform the opening of doors and the like.

More elaborate forms of these devices consist of video-intercoms which also allow video recording of the exterior zone and the sending of images to an associated display unit located inside the dwelling.

Although performing their function, the video-intercom devices known in the art nevertheless require complex and costly cabling of the conductors which connect the various devices located respectively outside and inside the dwelling, thereby making the installation of said devices complex and costly, in particular in old buildings which do not have specific channels for receiving the transmission cables.

The technical problem which is posed, therefore, is that of providing video-intercom apparatus for transmitting sound, video and command signals, which do not require conductors for connecting the various transmission/receiving devices located outside and/or inside the dwelling.

Within the context of this problem a further requirement is that these apparatus should allow a good definition of the images transmitted and should be easy and inexpensive to install.

These technical problems are solved according to the present invention by a method and an associated apparatus for recording, remote transmission and display of images and sounds, which comprises means for recording images and sounds arranged in at least one detection station; means for analog/digital conversion of the images and sounds; means for compression of the digital signals representing the images and sounds; means for radiofrequency transmission to at least one station for receiving the compressed digital signals; means for receiving digital signals transmitted at radiofrequency, arranged in at least one receiving station; wherein said means for transmitting/receiving the digital signals of the images and sounds are of the DECT type and comprise a frequency modulation device (GFSK) with a working frequency of between 1500 and 2300 MHz.

Further details may be obtained from the following description of a non-limiting example of embodiment of the invention, provided with reference to the accompanying plates of drawings in which:
- Figure 1 shows a general functional block diagram of the apparatus according to the present invention;
- Figure 2 shows a block diagram of the various component parts of the apparatus according to Fig. 1;

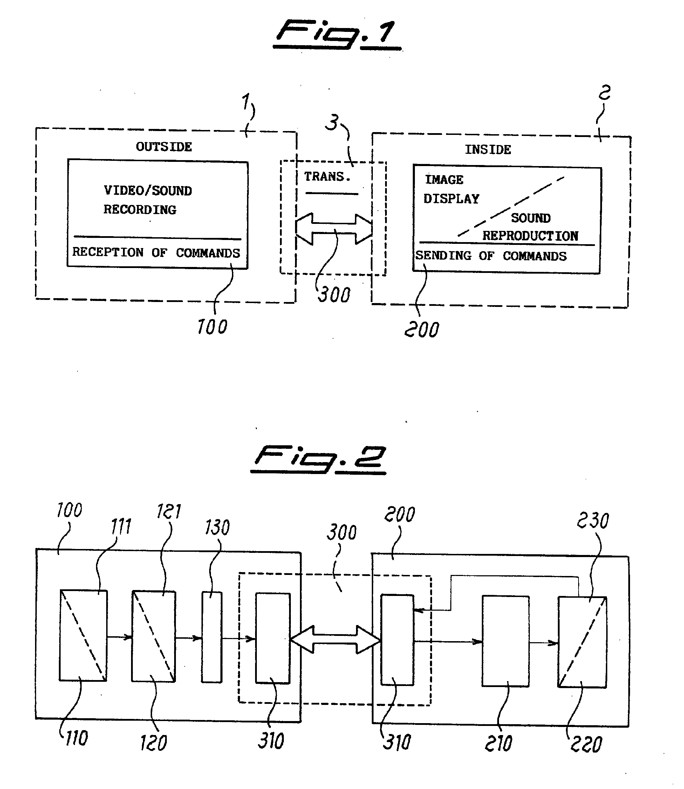

As illustrated the apparatus according to the invention is essentially composed of a device 1 for recording the images and sounds arranged on the outside of a dwelling and a device 2 arranged inside the said dwelling for receiving the images and sounds detected on the outside and if necessary for sending command signals in the opposite direction.

A device 3 for radiofrequency transmission is located between the two devices.

In greater detail the detection device 1 comprises recording means 100 consisting of:
a video camera 110 able to record images, preferably, but not exclusively, using digital technology, and a microphone circuit 111 able to detect sounds.

In the case of recording of images using analog technology, means 120 for analog/digital conversion of the said images are envisaged, while the sound signals which are always analog envisage an associated analog/digital conversion circuit 121.

Once digital signals have been obtained both for the image and for the sound, the signals are sent to processing and compression means 130 so as to allow transmission thereof.

This compression is performed by means of mathematical algorithms known in the art for example by the acronyms JPEG, JPEG2, MPEG and the like.

In a preferred embodiment recording is performed using images and colours and is sampled at least every two photograms per second.

The devices 3 for bidirectional transmission consist of electronic transceiver circuits which use a communications protocol 300 known by the acronym DECT (Digital Enhanced Cordless Telecommunications) which envisages a frequency modulation device of the GFSK (Gaussian Frequency Shift Keying) type which is made to operate at a frequency of between 1500 and 2300 MHz, preferably between 1880 and 1900 MHz with a transmission speed of at least 20 Kbits/sec. and preferably 32 kit/sec., and which allows the simultaneous transmission of the sound (8 Kbits/sec) and the image (24 Kbits/sec).

According to the invention it is envisaged moreover that the video-intercom apparatus comprises means 230 for transmission of command signals - for example for opening doors, switching on lights and the like - from the receiving station 2 to the detection station 1.

Since said means are known per se, they are not described in detail, it being implicit however that this transmission may also be performed at radiofrequency by means of the transceiver devices 310 so as to avoid the need for electric cables.

As can be understood from the description given above, the apparatus according to the present invention allows the transmission of both images and sounds and/or control signals without the need for cabled conductors, also increasing the functions of the present video-intercom and control systems, while ensuring at the same time simplicity of use and low installation costs. Although the apparatus has been described by way of example in relation to an external recording station and an internal receiving station, it is envisaged that the apparatus according to the invention may also allow different functions and uses such as for example:
- the arrangement of both the recording station and display stations inside the same dwelling, but in different rooms;
- a multiplicity of receiving stations all synchronized to the same calling frequency so as to allow reply from the most convenient point;
- a mobile internal receiving station for allowing transportation thereof by the user;
- the possibility of activation of the recording stations from a remote location with storage and display of the remote images;
- storage of the images of the visitors who receive no reply, so as to be able to recall them from a remote location using an "answer machine" function.

It is also envisaged that the apparatus - which in its basic configuration is able to operate locally (video-intercom with external station and internal station) - may be adapted so as to expand its range using signal repeaters which are arranged between the said two stations for detection and reception, respectively, and which thus may be arranged at any relative distance.

The present invention also defines a method for recording and transmitting images and sounds of video-intercom systems, which envisages the steps of:
- recording of images and sounds by a detection station;
- analog/digital conversion of the images and sounds;
- compression of the digital signals of images and sounds;
- transmission of the digital signals of images/sounds at radiofrequency;
- reception of the digital signals corresponding to images/sounds;
- display of the digital images reprocessed and reconstructed for display on a video and/or display and conversion of the digital signals corresponding to the sound into analog signals in the audible frequency range;
wherein the transmission of the digital signals of the images and sounds is performed using DECT technology with GFSK frequency modulation in a frequency range of between 1500 and 2300 MHz and a transmission speed of the digital signals of at least 20 Kbits/sec. and preferably 32 Kbits/sec.

In a preferred mode of implementation of the method it is envisaged that recording of the images is performed using digital technology and colour images with sampling at least every 2 photograms per second.

## Claims

1. Method for recording, remote transmission and display of images and sounds, which envisages the steps of:
- recording of images and sounds by at least one detection station;
- analog/digital conversion of the images and sounds;
- compression of the digital signals representing the images and sounds recorded;
- transmission at radiofrequency of the compressed digital signals to at least one receiving station;
- reception of the digital signals transmitted at radiofrequency;
- display of the digital images and conversion of the digital signals of the sound into analog signals in the audible frequency range;
wherein transmission of the digital signals of the images and sounds is performed using DECT technology in GFSK frequency modulation in a frequency range of between 1500 and 2300 MHz.

2. Method according to Claim 1, **characterized in that** the transmission frequency is preferably between 1880 and 1900 MHz.

3. Method according to Claim 1, **characterized in that** the transmission speed of the digital signals is at least 20 Kbits/sec.

4. Method according to Claim 3, **characterized in that** the transmission speed of the digital signals is preferably 32 Kbits/sec.

5. Method according to Claim 1, **characterized in that** recording of the images is digital.

6. Method according to Claim 1, **characterized in that** the image is sampled at least every two photograms per second.

7. Method according to Claim 1, **characterized in that** compression of the digital image/sound signals is performed by means of JPEG, MPEG, MP4 mathematical algorithms.

8. Method according to Claim 1, **characterized in that** the recording station (1), the transmission station (3) and the display station (2) forms a video-intercom apparatus.

9. Method according to Claim 1, **characterized in that** it comprises a step involving generation and sending of command signals at radiofrequency from the receiving station to the detection station.

10. Apparatus for recording, remote transmission and display of images and sounds, comprising:
- means (110,111) for recording images and sounds arranged in at least one detection station (1);
- means (120,121) for analog/digital conversion of the images and sounds;
- means (130) for compression of the digital signals representing the images and sounds;
- means (310) for radiofrequency transmission to at least one station (2) for receiving compressed digital signals;
- means (310) for receiving the digital signals transmitted at radiofrequency, arranged in at least one receiving station (2);
- means (210, 200) for decoding and displaying digital images and conversion of the sound signals into analog signals in the audible frequency range;
**characterized in that** said means (310) for transmitting/receiving the digital signals of the images and sounds are of the DECT type and comprise a frequency modulation device (GFSK) with a working frequency of between 1500 and 2300 MHz.

11. Apparatus according to Claim 10, **characterized in that** the working frequency of the DECT transmission means (31) is preferably between 1980 and 1990 MHz.

12. Apparatus according to Claim 10, **characterized in that** said transmission means (310) operate with a transmission speed of at least 20 Kbits/sec.

13. Apparatus according to Claim 12, **characterized in that** said transmission means operate preferably with a transmission speed of 32 Kbits/sec.

14. Apparatus according to Claim 10, **characterized in that** the analog/digital conversion means are associated with means (130) for processing and compressing the image.

15. Apparatus according to Claim 14, **characterized in that** said compression means are mathematical algorithms of the JPEG, JPEG2, MPEG type.

16. Apparatus according to Claim 10, **characterized in that** said colour images are sampled at least every two photograms per second.

17. Apparatus according to Claim 10, **characterized in that** it is a video-intercom apparatus.

18. Apparatus according to Claim 10, **characterized in that** said at least one receiving station (1) comprises means (230) for generating command signals able to be transmitted at radiofrequency to actuating devices by means of said transmission means (310).

19. Apparatus according to Claim 10, **characterized in that** it comprises repeater devices arranged between the detection station and the receiving station.
